# EUROPEAN PATENT SPECIFICATION

(11) **EP 1 545 747 B1**
(45) Date of publication and mention of the grant of the patent: **22.11.2006**
(21) Application number: 03769336.3
(22) Date of filing: 26.09.2003
(51) Int. Cl.: B01D 53/00, B01D 53/72

(54) **PROCESS AND PLANT FOR ULTRAPURIFYING FUMES OR GASSES**
VERFAHREN UND ANLAGE ZUR ULTRAREINIGUNG VON RAUCH UND GASEN
PROCEDE ET USINE D'ULTRAPURIFICATION DE VAPEURS OU DE GAZ

(30) Priority: 01.10.2002 IT VE20020030
(43) Date of publication of application: 29.06.2005
(73) Proprietor: TOGNAZZO, Valerio, I-35031 ABANO TERME (Padova-Italy) (IT)
(72) Inventor: TOGNAZZO, Valerio, I-35031 ABANO TERME (Padova-Italy) (IT)
(74) Representative: Piovesana, Paolo
(86) International application number: PCT/EP2003/010753
(87) International publication number: WO 2004/030795

(56) References cited:
- EP-A- 0 292 987
- DE-A- 4 022 087
- US-A- 4 281 518

## Description

The present invention relates to a process and a plant for ultrapurifying fumes or gases with total recovery of the resultant pollutants.

The atmosphere is well known to contain a considerable level of pollutant fumes and gases produced by ex-waste dumps (biogas), gasifiers, power stations, waste incinerators, etc. and containing micropollutants consisting mainly of particles of diameter less than 1 µm (fine particulate) which have been shown by epidemiological studies to cause illness and death.

The most obvious and dangerous example is that of waste incinerators, which generally consist of a large air-fed combustion chamber operating at about 900°C followed by a small post-combustion chamber operating at about 1200°C, and are able to transform the waste feed into mainly fine particles, into CO₂, into H₂O, etc.

Subsequent purification of the fumes with filters, also known as dry purification, is unable to effectively remove micropollutants in particular, whereas wet purification, which would be more effective, can no longer be used because discharge of polluted effluent water into the environment is forbidden.

Consequently although current waste incinerators solve the general problem of thermal destruction, they have not yet satisfactorily solved the problem of eliminating micropollutants. In particular, the fumes emitted by an incinerator contain dangerous micropollutants originating essentially from two sources: metals and organochlorine compounds (dioxins and furans). These latter are difficult to remove as only a small percentage (about 20%) becomes attached to dust or other easily removable solid particles present in the fumes, whereas the remainder are in the vapour state (aerosol) and particularly dangerous because on coming into contact with water or other liquids they are not removed, but instead are transported by them.

In particular the organochlorine compounds constitute very dangerous environmental pollutants as they are able to develop a teratogenic and carcinogenic activity and in addition harm the immune, endocrinic and reproductive systems. They are also bioaccumulable, i.e. they are able to accumulate along the alimentary chain, becoming always more dangerous with time.

DE-A-4022087 disclose waste gases containing light or heavy organic pollutants such as benzene or benzol are fed by a pipe into a bath of liquid containing foaming agent, forming multiple small bubbles which tip over an end partition into a shaft, cooling into snow while descending a chamber cooled by a deep-freezing evaporator. While water content freezes, solvents in the gases are converted into liquid leaving the gas purified. Solvents collect in layers, based on gravity, in a separately mounted PVC freezer vessel, and are removed via a solenoid valve, leaving the frozen water ready for melting if necessary and re-use.

Because of these serious problems which such pollutants are able to cause, the problem exists of removing them to the greatest possible extent, the object of the present invention therefore being to propose a method and plant for use downstream for example of any dry purification plant, to solve this problem.

Another object is to remove from gases, prior to their use, any pollutants which result in corrosion, wear, blockage, incrustation and other highly damaging consequences.

The aforesaid problem is solved according to the invention by a process for ultrapurifying fumes or gases with total recovery of the resultant pollutants, as described in claim 1.

The invention also foresees a plant for implementing the process as described in claim 32.

A preferred embodiment of the present invention is described in detail hereinafter with reference to the accompanying drawings, in which:

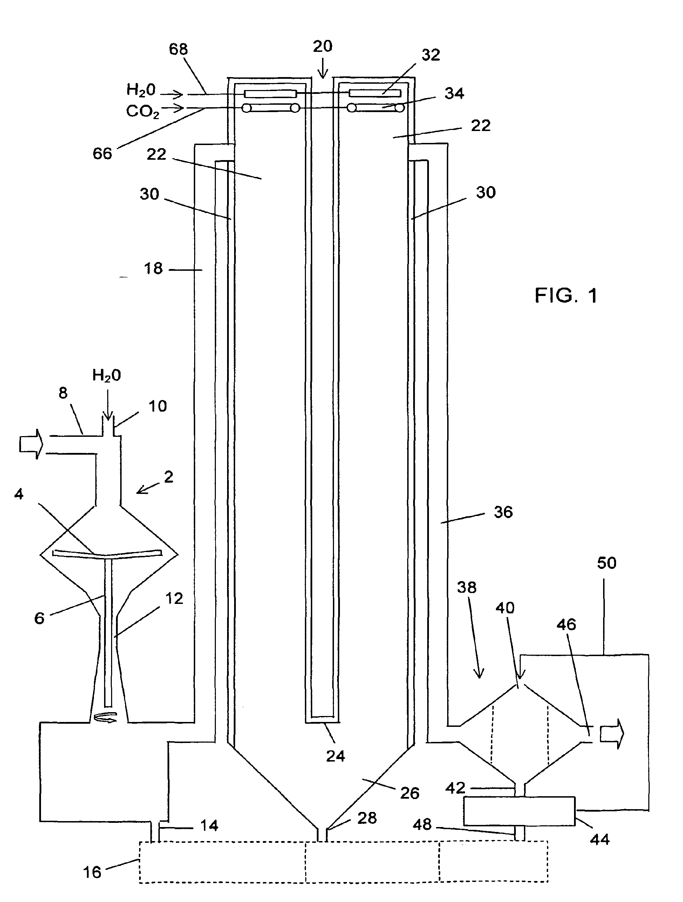

- Figure 1: shows schematically a plant for implementing the process of the invention, and

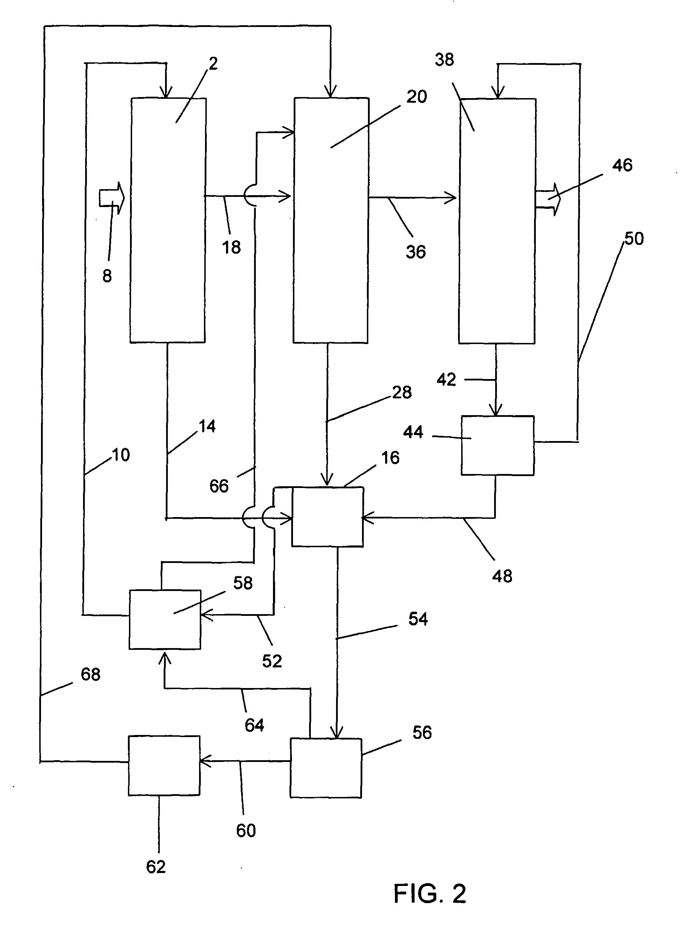

- Figure 2: shows a block diagram of the operation of the plant connected to external purification and gasification plants integrated with a system of fuel cells.

As can be seen from the figures, the ultrapurification plant of the invention is installed downstream of any purifier, for example of traditional type, which uses dry purification systems, possibly associated with equipment, for example a scrubber (not shown), to reduce the fume temperature to ambient (about 20-30°C).

In its essential lines it comprises a washer 2, consisting essentially of a vessel of double frusto-conical shape, the interior of which contains, at the level of the connection between the two major bases, a slightly upwardly concave plate 4 supported by a shaft 6 rotatable about its vertical axis at high speed, preferably not less than 1000 r.p.m.

The top of the vessel forming the water 2 is connected via a conduit 8 to the scrubber from which the fumes or gases to be treated originate, and via another short conduit 10 to the water jet feed at a temperature of about 4°C.

The lower part of the double-cone vessel 2 presents a constriction 12 able to determine a venturi effect, below this it being connected via a conduit 14 to a traditional water purifier 16. The washer is also connected via another conduit 18 to a snow wash chamber 20 (snow producer), fed at the top with unpolluted water.

The snow producer consists essentially of two side-by-side cylindrical vessels 22 of vertical axis connected together at their lower end by a horizontal conduit 24 having a conical lower part 26 and provided at its lowest point with a discharge conduit 28 towards the water purifier 16. Each cylinder 22 comprises a heat-insulating covering 30 on its outer surface and is provided upperly, below its roof, with a shower disc 32 fed by a conduit 68 for feeding unpolluted water. In a position below each shower disc 32 there is provided a perforated ring 34 fed by a conduit 66 for feeding CO₂ at a temperature substantially less than 0°C.

One of the two cylinders 22 receives in its upper part, a short distance from its upper edge, the conduit 18 connected to the washer 2, the other cylinder 22 receiving in its upper part a conduit 36 connected to an activated carbon filter 38.

This filter 38 consists of a vessel provided not only with the lateral connection opening to the conduit 38 for entry of the fume or gas stream, but also with an upper opening 40 for activated carbon entry, a lower discharge conduit 42 towards an underlying dryer 44, and a lateral opening 46 for discharging the completely purified fumes or gases.

From the activated carbon dryer 44 there extends a conduit 48 for discharging to the water purifier 16 the water which is generated during the activated carbon drying process. Traditional conveyors, indicated schematically in the drawings by a conveying line 50, are also provided for transferring the dried activated carbon from the dryer 44 to the upper opening 40 of the filter 38.

Due to the different features of pollution of the waters coming out from the washer 2, snow wash chamber 20 and dryer 44, it may be foreseen that the purifier 16 consists of several different purifiers, each suitable to treat the above polluted waters in a more reliable way.

As stated, in the plant of the invention not only the discharge conduit 14 from the washer 2 but also the discharge conduit 28 from the snow producer 20 and the discharge conduit 48 from the activated carbon dryer 44 are connected to the water purifier 16, which for example comprises an evaporator providing purified exit steam along a conduit 52 and resultant polluted water along another conduit 54.

The water purifier 16 is connected by the conduit 54 to a gasifier 56, consisting advantageously of the machine the subject of EP-B1-0292987, entitled "Method and machine for transforming pollutant or waste combustible materials into clean energy and usable products", able to dissociate the water and recover the hydrogen.

This gasifier comprises
- a thermic lance disgregator operating in absence of air and at a temperature higher than 1600° C the whole decomposition of the material to be treated into combustible gases based on H₂ and CO, non-combustible gases and inerts,
- a water separator to suddenly cool together all the products thus decomposed and to separate the inert products with water, thus generating steam and reducing the gases temperature at not least than 1200° C,
- a filter-thermoreactor containing a depurative carbonaceous mass heated at a temperature higher than 1200° C, said filter-thermoreactor being connected to said disgregator and to said separator to remove the residual pollutants from the gases and to transform them, at least in part, into hydrogen, carbon monoxide acid other wholly utilisable gaseous products, and
- a refrigerator for said gaseous products coming out from said filter-thermoreactor

The conduit 52 leaving the purifier 16 enters a heat exchanger 58 and leaves as the conduit 10, which feeds the washer 2 with ice-cold water.

The gasifier 56 is connected via a conduit 60 to a fuel cell system 62 for its feeding with H₂ and via another conduit 64 to the heat exchanger 58 for its feeding with liquid CO₂, and from there, via the conduit 66, to the perforated rings 34 of the cylinders 22 of the snow producer 20.

The fuel cell system 62 is connected via the conduit 68 to the sprinkler discs 32 of the cylinders 22 of the snow producer 20, for its feeding with unpolluted water.

The plant of the invention is also provided with a plurality of systems for the control, monitoring and adjustment of all the operative parameters, in particular of the fluid temperatures and flow rates. As these systems can be considered traditional and hence within the capacity of the expert of the art, they are not further described.

The aforedescribed plant operates in the following manner:
the fumes and gases to be treated and from which macropollutants have already been removed are fed into the washer 2, together with the jet of ice-cold water originating from the heat exchanger 58 and fed from above via the conduit 10. Within the washer 2 the water strikes the plate 4 which, by virtue of its rotation, propels it at high speed by centrifugal effect against the facing lateral wall of the washer, this wall being grazed internally by the fumes or gases containing the micropollutants.

The effect of the hurling of said fumes or gases against the wall of the washer 2 by the water flow, which is at its maximum density, combined with the reduction in the cross-section of their passage through the annular gap bounded by the rotating plate 4 and said wall of the washer 2, causes the water to incorporate a large part of the pollutants. This incorporation is facilitated if the angle formed by the direction of said centrifugal water jet and the fume or gas flow direction is less than 90°.

The subsequent annular constriction 16 traversed by the water/fume or gas mixture pressurizes the system by the venturi effect, to enhance this incorporation.

The resultant polluted water is discharged from the washer 2 through the conduit 14 and transferred to the purifier 16, where it is treated.

The thus pretreated fumes or gases containing the micropollutants in a considerably smaller quantity leave the washer 2 and pass through the conduit 18 to enter the snow producer 20. Here, on encountering the flow of cold CO₂ originating from the heat exchanger 58 and fed through the conduit 66 into the snow producer 20 from above, the unpolluted water, obtained by hydrogen combustion in the fuel cells 62, in accordance with the already stated EP-B1-0292987, is transformed into snow flakes by virtue of the low temperature of said CO₂. These, while descending along the two cylinder vessels 22 forming said snow producer, encounter the stream of fumes or gases in co-current and in counter-current along the labyrinth path, to pick up the water containing the pollutants, so increasing their volume, and the pollutants not contained in the water.

According to the invention the water can be transformed into snow flakes in other ways, for example by cooling the snow producer 20 with a CO₂ stream directed onto the outside of the walls of the cylinder vessels 22, or by using a different cold gas, for example nitrogen, or oxygen later used as combustion support in the gasifier 56.

It should be noted that the seizure effect of the snow flakes and the reduced kinetics of the micropollutants, due to the low temperature at which their removal takes place, determine the optimum conditions for seizure with high operative yield, both of the water containing pollutants and of those pollutants not contained in the water. The effect of the snow flakes is to be considered similar to that of the activated carbon, with the additional capacity of removing types of pollutants not removable by activated carbon.

At the exit of the snow producer 20 the fume or gas flow is virtually free of any trace of water, which because of the low temperature has undergone freezing, with growth of the snow flakes. This flow of fumes or gases undergoes heating to above 0°C during its passage through the conduit 36 both because of the length of this conduit and because of the possible presence of heating means therealong. At the end of its path the heated fume or gas stream enters the filter 38 containing activated carbon at a temperature exceeding 0°C, and travels downwards from the top to soak up any water which has not been taken up in the snow producer 20. As a result of this the activated carbon becomes moist and is regenerated in the dryer 44, from which it is returned to the cycle through the conveying line 50.

In an advantageous embodiment of the invention, the heat required to dry the activated carbon is provided by the plant which produces the fumes or gases to be purified or, in particular, by the gasifier 56.

The water leaving the dryer 44 is fed through the conduit 48 to the purifier 16 where it is subjected to a traditional purification process in a like manner to the water leaving the washer 2 and the snow producer 20.

After successive regeneration cycles, when the activated carbon is spent it can be fed to the gasifier 56 for its thermal destruction.

Because of the triple purification stage effected in the washer 2, in the snow producer 20 and in the activated carbon filter 44, the fume or gas flow leaving this filter through the opening 46 is totally free of any trace of pollutants.

It should be noted that the washer 2, which absorbs the pollutants in an optimum manner on the basis of the two principles of centrifugal force and venturi pressure effect, exercises a powerful reduction on the pollutants contained in the fumes or gases. However these will inevitably entrain at the exit of the washer 2 a small quantity of water containing micropollutants. The subsequent snow producer 20 has the capacity to lock onto the snow flakes the water which has emerged from the washer 2 and hence the micropollutants contained in them, to hence achieve a more thorough purification. The subsequent activated carbon filter 38 totally removes the minimal traces of water containing micropollutants which may have escaped the effect of the snow flakes, so completing purification.

The aforedescribed ultrapurification plant is advantageously used together with a gasifier according to the said EP-B1-0 292 987. For this purpose the purified steam leaving the purifier 16 is fed through the conduit 52 to the heat exchanger 58, while the resultant polluted water leaving the purifier 16 is fed to the gasifier 56 in which it is transformed into H₂ and liquid CO₂.

The liquid CO₂ is fed through the conduit 64 to the heat exchanger 58, in which it undergoes partial heat transfer with the steam from the purifier 16, to condense it and transform it into water at 4°C. The CO₂, now heated but still at a temperature below 0°C, is fed through the conduit 66 to the perforated rings 34 of the snow producer 20, while the ice-cold water obtained by condensing the steam is fed through the conduit 10 into the washer 2.

The hydrogen from the gasifier 56 is fed through the conduit 60 to the fuel cell system 62, by which usable energy and unpolluted water are generated. This latter is fed through the conduit 68 to feed the sprinkler discs 32 of the snow producer 20.

The final result of the thus integrated process of the invention is hence the total purification of the fumes or gases and the production of energy by the fuel cell system 62, with considerable environmental and economical advantages.

It should also be noted that in general the gases leaving the gasification plant of EP-B1-0 292 987 contain acids (hydrochloric acid, sulphuric acid, etc.) which the various traditional purification systems are unable to remove completely, even though their purification costs are very high.

These acids, dissolved in the residual process water, rapidly decompose the metal-based catalysts generally used to convert carbon monoxide (CO) and water (H₂O) into carbon dioxide (CO₂) and hydrogen (H₂). These acids also contaminate the carbon dioxide obtained, making it unusable, hence leading to high economical losses. Finally these acids have damaging effects on integrated gasifier-fuel cell plants, where a very high purity of the fuel gas used to generate electrical energy (with high efficiency), heat and unpolluted water is essential.

Consequently the application of the present invention is very advantageous for the gasification plant of EP-B1-0 292 987.

The gasification plant of EP-B1-0 292 987, when used for example to thermally destroy plastic, has in practice a minimum capacity of 2 t/h and is able to produce:
- 14,700 m³/h of gas to be subjected to ultrapurification treatment,
- 9.5 MW in excess, to be used for evaporating the discharge water from the ultrapurification plant, to hence recycle it,
- 12 MW of electrical energy for use in operating the washer, etc.;
- 7300 kg/h of CO₂ at -40°C (in addition to H₂ and/or O₂ and/or N₂) for cooling water and gas and for obtaining snow,
- 1100 1/h of unpolluted water, obtained by total recovery of the pollutants fed into the gasifier, for snow production.

Although these quantities are obtained from a very small quantity of thermally destroyed plastic material, they are much higher than required for operating the ultrapurification plant of the present invention; it follows that integrating this ultrapurification plant with a gasifier in accordance with EP-B1-0 292 987 enables the waste products of this latter to be used not only for feeding the former plant, but also for feeding other ultrapurification plants to remove pollutants produced by other types of plant (for example incinerators, cement factories, etc.).

## Claims

1. A process for ultrapurifying fumes or gases with total recovery of the resultant pollutants, **characterised by**:
- subjecting a stream of pollutant-containing fumes or gases to a sprinkle wash by unpolluted water within a snow producer (20) and subjecting the water, during its passage, to rapid cooling to a temperature sufficient to transform it into snow flakes, which along their path collect the pollutants present in the stream of fumes or gases,
- discharging from said snow producer (20) said snow flakes which have reached the base thereof, and
- feeding to a gasifier (56) the resultant polluted water deriving from said snow flakes.

2. A process as claimed in claim 1, **characterised by** feeding an ascending stream of fumes or gases into said snow producer (20).

3. A process as claimed in claim 1, **characterised by** subjecting the stream of gases or fumes to the action of the snow flakes within said snow producer (20) along at least one portion of their path in co-current and along at least one portion of their path in counter-current.

4. A process as claimed in claim 1, **characterised by** using, for the wash, unpolluted water provided by fuel cells (62) fed with hydrogen produced by said gasifier (56).

5. A process as claimed in claim 1, **characterised by** cooling the wash water to a temperature not greater than 0°C.

6. A process as claimed in claim 1, **characterised by** rapidly cooling the wash water by cooling the snow producer (20).

7. A process as claimed in claim 6, **characterised by** cooling said snow producer (20) with a stream of cold fluid circulating externally along the walls of the snow producer.

8. A process as claimed in claim 1, **characterised by** rapidly cooling said unpolluted water with a stream of cold gas injected into said snow producer (20).

9. A process as claimed in claims 4 and 7, **characterised by** cooling said snow producer (20) with the oxygen used as combustion support in the gasifier (56).

10. A process as claimed in claims 7 and/or 8, **characterised by** rapidly cooling the wash water with a stream of carbon dioxide.

11. A process as claimed in claims 7 and/or 8, **characterised by** rapidly cooling the wash water with a stream of nitrogen.

12. A process as claimed in claim 1, **characterised by** passing the stream of fumes or gases, already subjected to the action of the snow flakes, through dry activated carbon.

13. A process as claimed in claim 12, **characterised by** drying the activated carbon with heat obtained from a thermal destruction plant (56).

14. A process as claimed in claim 12, **characterised by** drying the activated carbon with heat generated by the plant which produces the stream of fumes or gases to be purified.

15. A process as claimed in claims 13 and/or 14, **characterised by** feeding to a gasifier (56) the resultant polluted water obtained by drying the activated carbon.

16. A process as claimed in claim 12, **characterised by** feeding the spent activated carbon to a thermal destruction plant (56).

17. A process as claimed in claim 1, **characterised in that** before subjecting the stream of gases or fumes to the action of the snow flakes it is subjected to washing, after which the resultant polluted water is fed to the gasifier (56).

18. A process as claimed in claim 17, **characterised by** washing the stream of fumes or gases by striking said stream with a water jet at high speed.

19. A process as claimed in claim 18, **characterised by** washing the stream of fumes or gases with a water jet forming an angle less than 90° to the direction of said stream of fumes or gases.

20. A process as claimed in claim 18, **characterised by** impressing high speed onto the water jet by making it fall from above onto a plate (4) rotating about a vertical axis.

21. A process as claimed in claim 17, **characterised by** washing the stream of fumes or gases with water at a temperature of about 4°C.

22. A process as claimed in claim 21, **characterised by** obtaining the wash water at a temperature of about 4°C by cooling with cold gas.

23. A process as claimed in claim 21, **characterised by** obtaining the wash water at a temperature of about 4°C by cooling with gas from the gasifier (56).

24. A process as claimed in claim 22, **characterised by** cooling the wash water with carbon dioxide.

25. A process as claimed in claim 22, **characterised by** cooling the wash water with nitrogen.

26. A process as claimed in claim 22, **characterised by** cooling the wash water with oxygen.

27. A process as claimed in claim 17, **characterised by** washing the stream of fumes or gases in a washer (2) having at least one wall grazed by said stream.

28. A process as claimed in one or more of claims 1, 15 and 17, **characterised by** feeding the polluted discharge waters to a purification plant (16) before feeding them to the gasifier (56).

29. A process as claimed in claim 1, **characterised by** using a gasifier (56) comprising:
- a thermic lance disgregator operating in absence of air and at a temperature higher than 1600° C the whole decomposition of the material to be treated into combustible gases based on H₂ and CO, non-combustible gases and inerts,
- a water separator to suddenly cool together all the products thus decomposed and to separate the inert products with water, thus generating steam and reducing the gases temperature at not least than 1200° C,
- a filter-thermoreactor containing a depurative carbonaceous mass heated at a temperature higher than 1200° C, said filter-thermoreactor being connected to said disgregator and to said separator to remove the residual pollutants from the gases and to transform them, at least in part, into hydrogen, carbon monoxide acid other wholly utilisable gaseous products, and
- a refrigerator for said gaseous products coming out from said filter-thermoreactor.

30. A process as claimed in claims 28 and 29, **characterised by** condensing the steam generated by the purification plant (16) by means of liquid CO₂ produced by the gasifier (56) to obtain in this manner water with which the washer (2) is fed.

31. A process as claimed in claim 29, **characterised by** using the hydrogen produced by the gasifier (56) to feed fuel cells (61), from which unpolluted water is obtained to feed the snow producer (20).

32. A plant for implementing the process claimed in one or more of claims from 1 to 31, **characterised by** comprising:
- a snow producer (20) fed with the stream of fumes or gases to be purified and also fed with unpolluted water,
- cooling means (34) associated with said snow producer (20), to transform said water into snow flakes,
- at least one exit conduit (36) from said snow producer (20) for the stream of purified fumes or gases, and
- means (28) for connecting the base (26) of said snow producer (20) to a gasifier (56) for the resultant polluted water deriving from said snow flakes.

33. A plant as claimed in claim 32, **characterised in that** the stream of fumes or gases within said snow producer (20) is ascending.

34. A plant as claimed in claim 32, **characterised in that** the snow producer (20) is shaped to provide at least one portion through which the stream of fumes or gases takes a descending path and at least one portion through which it ascends.

35. A plant as claimed in claim 32, **characterised in that** the base of said snow producer (20) is of conical shape.

36. A plant as claimed in claim 34, **characterised in that** the snow producer (20) comprises at least two vessels (22) of substantially vertical extension, connected together to define a labyrinth path for the stream of fumes or gases.

37. A plant as claimed in claim 32, **characterised in that** the walls of the snow producer (20) are heat insulated.

38. A plant as claimed in claim 32, **characterised in that** the snow producer (20) is provided upperly with means (32) for the sprinkling delivery of said unpolluted water.

39. A plant as claimed in claim 32, **characterised in that** the snow producer (20) is provided upperly with a plurality of nozzles (34) for delivering a stream of cold gas.

40. A plant as claimed in claim 32, **characterised in that** the snow producer (20) is provided upperly with at least one perforated ring (34) fed with cold gas.

41. A plant as claimed in claim 32, **characterised in that** the walls of the snow producer (20) are provided with at least one interspace for circulating a stream of cold gas.

42. A plant as claimed in claim 32, **characterised in that** the outlet for the stream of fumes or gases from the snow producer (20) is connected via a conduit (36) to an activated carbon filter (38).

43. A plant as claimed in claim 42, **characterised in that** the characteristics of said conduit (36) are chosen to enable the stream of fumes or gases to be heated as it flows therethrough.

44. A plant as claimed in claim 42, **characterised in that** said conduit (36) is provided with heating means.

45. A plant as claimed in claim 42, **characterised in that** the a dryer (44) for regenerating said activated carbon is associated with the activated carbon filter (36), together with a conveyor line (50) for said carbon regenerated within said filter (38).

46. A plant as claimed in claim 45, **characterised in that** said dryer (44) is provided with means (48) for its connection to said gasifier (56).

47. A plant as claimed in claim 45, **characterised in that** said dryer (44) is connected to a thermal destruction plant (56) for providing the heat necessary for the dryer operation.

48. A plant as claimed in claim 32, **characterised by** comprising a washer (2) provided upstream of said snow producer (20) for preliminary treatment of the stream of fumes or gases to be purified.

49. A plant as claimed in claim 48, **characterised in that** said washer (2) consists of a circular vessel provided internally with a rotating plate (4), the edge of which defines with the wall of said vessel an annular passage for the mixture of said fumes or gases fed into said vessel, with the wash water which is made to fall from the top of said vessel onto said rotating plate (4).

50. A plant as claimed in claim 49, **characterised in that** the rotating plate (4) presents a slight upwardly facing concavity.

51. A plant as claimed in claim 49, **characterised in that** said vessel is of double conical form, with the central part of major diameter positioned at the height of said rotating plate (4).

52. A plant as claimed in claim 32, **characterised in that** said washer (2) is connected to said gasifier (56) via a conduit (14).

53. A plant as claimed in one or more of claims 35, 46 and 52, **characterised by** comprising a purifier (16) fed with the discharge waters and connected to said gasifier (56).

54. A plant as claimed in claim 53, **characterised in that** said purifier (16) comprises an evaporator with an exit for steam and another exit for resultant polluted water, which feeds said gasifier (56).

55. A plant as claimed in claim 53, **characterised by** comprising a heat exchanger (58), of which the cooling circuit is fed with CO₂ originating from said gasifier (56) and is connected to said snow producer (20), the cooled circuit being fed with steam originating from said purification plant (16) and being connected to said washer (2).

56. A plant as claimed in claim 32, **characterised by** comprising a fuel cell system (62) which is fed with hydrogen from said gasifier (56) and which feeds said snow producer (20) with unpolluted water.

57. A plant as claimed in claim 45, **characterised in that** the gasifier (56) is connected to the dryer (44) to provide the heat necessary for operating this latter.

## Patentansprüche

1. Verfahren zur Ultrareinigung von Rauch oder Gasen mit völliger Rückgewinnung der gebildeten Schadstoffe, **dadurch gekennzeichnet, dass**
- ein Strom des schadstoffhaltigen Rauchs oder der schadstoffhaltigen Gase einer Sprinklerwaschung mit schadstofffreiem Wasser in einem Schneeerzeuger (20) unterworfen wird und das Wasser während seines Durchtritts einer raschen Kühlung auf eine Temperatur unterworfen wird, die ausreicht, um es in Schneeflocken umzuwandeln, die auf ihrem Weg die Schadstoffe aufsammeln, die in dem Rauch- oder Gasstrom enthalten sind,
- aus dem besagten Schneeerzeuger (20) die besagten Schneeflocken, die dessen Basis erreicht haben, entleert werden, und
- das erhaltene schadstoffhaltige Wasser, das aus den besagten Schneeflocken stammt, einem Vergaser (56) zugeführt wird.

2. Verfahren nach Anspruch 1, **dadurch gekennzeichnet, dass** ein aufsteigender Rauch- oder Gasstrom in den besagten Schneeerzeuger (20) eingeführt wird.

3. Verfahren nach Anspruch 1, **dadurch gekennzeichnet, dass** der Gas- oder Rauchstrom der Wirkung der Schneeflocken in dem besagten Schneeerzeuger (20) entlang wenigstens eines Abschnitts ihres Weges im Gleichstrom und entlang wenigstens eines Abschnitts ihres Weges im Gegenstrom ausgesetzt wird.

4. Verfahren nach Anspruch 1, **dadurch gekennzeichnet, dass** zum Waschen schadstofffreies Wasser verwendet wird, das von Brennstoffzellen (62) geliefert wird, denen Wasserstoff zugeführt wird, der von dem besagten Vergaser (56) erzeugt wird.

5. Verfahren nach Anspruch 1, **dadurch gekennzeichnet, dass** das Waschwasser auf eine Temperatur von nicht mehr als 0 °C gekühlt wird.

6. Verfahren nach Anspruch 1, **dadurch gekennzeichnet, dass** das Waschwasser durch Kühlen des Schneeerzeugers (20) rasch abgekühlt wird.

7. Verfahren nach Anspruch 6, **dadurch gekennzeichnet, dass** der besagte Schneeerzeuger (20) mit einem kalten Fluidstrom gekühlt wird, der extern entlang der Wände des Schneeerzeugers zirkuliert.

8. Verfahren nach Anspruch 1, **dadurch gekennzeichnet, dass** das besagte schadstofffreie Wasser mit einem kalten Gasstrom rasch abgekühlt wird, der in den besagten Schneeerzeuger (20) injiziert wird.

9. Verfahren nach Anspruch 4 und 7, **dadurch gekennzeichnet, dass** der besagte Schneeerzeuger (20) mit Sauerstoff abgekühlt wird, welcher als Verbrennungsunterstützung in dem Vergaser (56) verwendet wird.

10. Verfahren nach Anspruch 7 und/oder 8, **dadurch gekennzeichnet, dass** das Waschwasser mit einem Kohlendioxidstrom rasch abgekühlt wird.

11. Verfahren nach Anspruch 7 und/oder 8, **dadurch gekennzeichnet, dass** das Waschwasser mit einem Stickstoffstrom rasch abgekühlt wird.

12. Verfahren nach Anspruch 1, **dadurch gekennzeichnet, dass** der Rauch- oder Gasstrom, der bereits der Wirkung der Schneeflocken unterworfen worden ist, trockene Aktivkohle durchströmt.

13. Verfahren nach Anspruch 12, **dadurch gekennzeichnet, dass** die Aktivkohle mit Wärme getrocknet wird, die aus einer thermischen Zerstörungsanlage (56) erhalten wird.

14. Verfahren nach Anspruch 12, **dadurch gekennzeichnet, dass** die Aktivkohle mit Wärme getrocknet wird, die durch die Anlage erzeugt wird, welche den zu reinigenden Rauch- und Gasstrom produziert.

15. Verfahren nach Anspruch 13 und/oder 14, **dadurch gekennzeichnet, dass** das erhaltene schadstoffhaltige Wasser, das beim Trocknen der Aktivkohle erhalten wird, einem Vergaser (56) zugeführt wird.

16. Verfahren nach Anspruch 12, **dadurch gekennzeichnet, dass** die verbrauchte Aktivkohle einer thermischen Zerstörungsanlage (56) zugeführt wird.

17. Verfahren nach Anspruch 1, **dadurch gekennzeichnet, dass**, bevor der Gas- oder Rauchstrom der Wirkung der Schneeflocken unterworfen wird, er einer Waschung unterworfen wird, nach der das gebildete schadstoffhaltige Wasser dem Vergaser (56) zugeführt wird.

18. Verfahren nach Anspruch 17, **dadurch gekennzeichnet, dass** der Rauch- oder Gasstrom gewaschen wird, indem der besagte Strom von einem Wasserstrahl hoher Geschwindigkeit getroffen wird.

19. Verfahren nach Anspruch 18, **dadurch gekennzeichnet, dass** der Rauch- oder Gasstrom mit einem Wasserstrahl gewaschen wird, der einen Winkel von weniger als 90 ° zur Richtung des besagten Rauch- oder Gasstroms einnimmt.

20. Verfahren nach Anspruch 18, **dadurch gekennzeichnet, dass** dem Wasserstrahl eine hohe Geschwindigkeit verliehen wird, indem er von oben auf eine Platte (4) fällt, welche sich um eine senkrechte Achse dreht.

21. Verfahren nach Anspruch 17, **dadurch gekennzeichnet, dass** der Rauch- oder Gasstrom mit Wasser mit einer Temperatur von etwa 4 °C gewaschen wird.

22. Verfahren nach Anspruch 21, **dadurch gekennzeichnet, dass** das Waschwasser mit einer Temperatur von etwa 4 °C durch Kühlen mit einem kalten Gas erhalten wird.

23. Verfahren nach Anspruch 21, **dadurch gekennzeichnet, dass** das Waschwasser mit einer Temperatur von etwa 4 °C durch Kühlen mit Gas von dem Vergaser (56) erhalten wird.

24. Verfahren nach Anspruch 22, **dadurch gekennzeichnet, dass** das Waschwasser mit Kohlendioxid gekühlt wird.

25. Verfahren nach Anspruch 22, **dadurch gekennzeichnet, dass** das Waschwasser mit Stickstoff gekühlt wird.

26. Verfahren nach Anspruch 22, **dadurch gekennzeichnet, dass** das Waschwasser mit Sauerstoff gekühlt wird.

27. Verfahren nach Anspruch 17, **dadurch gekennzeichnet, dass** der Rauch- oder Gasstrom in einem Wascher (2) gewaschen wird, der wenigstens eine Wand aufweist, die von dem besagten Strom berührt wird.

28. Verfahren nach einem oder mehreren der Ansprüche 1, 15 und 17, **dadurch gekennzeichnet, dass** das schadstoffhaltige entleerte Wasser einer Reinigungsanlage (16) zugeführt wird, bevor es dem Vergaser (56) zugeführt wird.

29. Verfahren nach Anspruch 1, **dadurch gekennzeichnet, dass** ein Vergaser (56) verwendet wird, der umfasst:
- einen thermischen Lanzenzertrümmerer, der in Abwesenheit von Luft und bei einer Temperatur von mehr als 1600 °C betrieben wird, um das gesamte zu behandelnde Material in verbrennbare Gase auf der Basis von H₂, CO, nichtbrennbaren Gasen und Inertstoffen zu zersetzen,
- einen Wasserseparator, um zusammen alle derart zersetzten Produkte plötzlich zu kühlen und die inerten Produkte mit Wasser abzutrennen, um Dampf zu erzeugen und die Gastemperatur auf nicht weniger als 1200 °C zu reduzieren,
- einen Filter-Thermoreaktor, der eine reinigende kohlenstoffhaltige Masse enthält, die auf eine Temperatur von mehr als 1200 °C erwärmt ist, wobei der besagte Filter-Thermoreaktor mit dem besagten Zertrümmerer und dem besagten Separator verbunden ist, um restliche Schadstoffe aus den Gasen zu entfernen und um sie wenigstens teilweise in Wasserstoff, Kohlenmonoxidsäure oder andere insgesamt brauchbare gasförmige Produkte umzuwandeln, und
- eine Kühleinrichtung für die besagten gasförmigen Produkte, welche aus dem besagten Filter-Thermoreaktor austreten.

30. Verfahren nach Anspruch 28 und 29, **dadurch gekennzeichnet, dass** der Dampf, der von der Reinigungsanlage (16) mittels flüssigem CO₂ erzeugt wird, das von dem Vergaser (56) produziert wird, kondensiert wird, um auf diese Weise Wasser zu erhalten, das dem Wascher (2) zugeführt wird.

31. Verfahren nach Anspruch 29, **dadurch gekennzeichnet, dass** der Wasserstoff, der von dem Vergaser (56) erzeugt wird, verwendet wird, um die Brennstoffzellen (61) zu versorgen, von denen schadstofffreies Wasser erhalten wird, das dem Schneeerzeuger (20) zugeführt wird.

32. Anlage zur Durchführung des Verfahrens nach einem der Ansprüche 1 bis 31, **dadurch gekennzeichnet, dass** sie umfasst:
- einen Schneeerzeuger (20), dem der zu reinigende Rauch- oder Gasstrom zugeführt wird und dem ebenfalls schadstofffreies Wasser zugeführt wird,
- eine Kühleinrichtung (34), die dem besagten Schneeerzeuger (20) zugeordnet ist, um das besagte Wasser in Schneeflocken umzuwandeln,
- wenigstens eine Auslassleitung (36) von dem besagten Schneeerzeuger (20) für den gereinigten Rauch- oder Gasstrom, und
- eine Einrichtung (28) zur Verbindung der Basis (26) des besagten Schneeerzeugers (20) mit einem Vergaser (56) für das erhaltene schadstoffhaltige Wasser, das von den besagten Schneeflocken stammt.

33. Anlage nach Anspruch 32, **dadurch gekennzeichnet, dass** der Rauch- oder Gasstrom in dem besagten Schneeerzeuger (20) nach oben steigt.

34. Anlage nach Anspruch 32, **dadurch gekennzeichnet, dass** der Schneeerzeuger (20) so geformt ist, um wenigstens einen Abschnitt zu bilden, durch den der Rauch- oder Gasstrom einen absteigenden Weg nimmt und wenigstens einen Abschnitt, durch den er aufsteigt.

35. Anlage nach Anspruch 32, **dadurch gekennzeichnet, dass** die Basis des besagten Schneeerzeugers (20) eine konische Form aufweist.

36. Anlage nach Anspruch 34, **dadurch gekennzeichnet, dass** der Schneeerzeuger (20) wenigstens zwei sich im Wesentlichen vertikal erstreckende Gefäße (22) aufweist, die miteinander verbunden sind, um einen Labyrinthweg für den Rauch- und Gasstrom zu definieren.

37. Anlage nach Anspruch 32, **dadurch gekennzeichnet, dass** die Wände des Schneeerzeugers (20) wärmeisoliert sind.

38. Anlage nach Anspruch 32, **dadurch gekennzeichnet, dass** der Schneeerzeuger (20) oben mit einer Einrichtung (32) zur Sprinklerabgabe des besagten schadstofffreien Wassers versehen ist.

39. Anlage nach Anspruch 32, **dadurch gekennzeichnet, dass** der Schneeerzeuger (20) oben mit einer Vielzahl von Düsen (34) zur Abgabe eines kalten Gasstroms versehen ist.

40. Anlage nach Anspruch 32, **dadurch gekennzeichnet, dass** der Schneeerzeuger (20) oben mit wenigstens einem perforierten Ring (34) versehen ist, dem kaltes Gas zugeführt wird.

41. Anlage nach Anspruch 32, **dadurch gekennzeichnet, dass** die Wände des Schneeerzeugers (20) mit wenigstens einem Zwischenraum zur Zirkulation eines kalten Gasstroms versehen sind.

42. Anlage nach Anspruch 32, **dadurch gekennzeichnet, dass** der Auslass für den Rauch- oder Gasstrom von dem Schneeerzeuger (20) über eine Leitung (36) mit einem Aktivkohlefilter (38) verbunden ist.

43. Anlage nach Anspruch 42, **dadurch gekennzeichnet, dass** die Eigenschaften der besagten Leitung (36) gewählt werden, um den Rauch- oder Gasstrom zu erwärmen, wenn er durchfließt.

44. Anlage nach Anspruch 42, **dadurch gekennzeichnet, dass** die besagte Leitung (36) mit einer Heizeinrichtung versehen ist.

45. Anlage nach Anspruch 42, **dadurch gekennzeichnet, dass** ein Trockner (44) zur Regenerierung der besagten Aktivkohle dem Aktivkohlefilter (36) zugeordnet ist, zusammen mit einer Förderlinie (50) für den besagten Kohlenstoff, der in dem besagten Filter (38) regeneriert worden ist.

46. Anlage nach Anspruch 45, **dadurch gekennzeichnet, dass** der besagte Trockner (44) mit einer Einrichtung (48) zu seiner Verbindung mit dem besagten Vergaser (56) versehen ist.

47. Anlage nach Anspruch 45, **dadurch gekennzeichnet, dass** der besagte Trockner (44) mit einer thermischen Zerstörungsanlage (56) verbunden ist, um die Wärme zu liefern, die für den Trocknerbetrieb notwendig ist.

48. Anlage nach Anspruch 32, **dadurch gekennzeichnet, dass** sie einen Wascher (2) umfasst, der stromaufwärts von dem besagten Schneeerzeuger (20) zur vorläufigen Behandlung des zu reinigenden Rauch- oder Gasstroms vorgesehen ist.

49. Anlage nach Anspruch 48, **dadurch gekennzeichnet, dass** der besagte Wascher (2) aus einem kreisförmigen Gefäß besteht, das innen mit einer rotierenden Platte (4) versehen ist, deren Kante mit der Wand des besagten Gefäßes einen ringförmigen Durchgang für das Gemisch aus dem besagten Rauch oder den besagten Gasen, die dem besagten Gefäß zugeführt werden, definiert, wobei das Waschwasser von dem oberen Ende des besagten Gefäßes auf die besagte rotierende Platte (4) fällt.

50. Anlage nach Anspruch 49, **dadurch gekennzeichnet, dass** die rotierende Platte (4) eine leicht aufwärts weisende Konkavität aufweist.

51. Anlage nach Anspruch 49, **dadurch gekennzeichnet, dass** das besagte Gefäß eine doppelkonische Form aufweist, wobei der mittlere Teil mit dem größten Durchmesser in der Höhe der besagten rotierenden Platte (4) angeordnet ist.

52. Anlage nach Anspruch 32, **dadurch gekennzeichnet, dass** der besagte Wascher (2) mit dem besagten Vergaser (56) über eine Leitung (14) verbunden ist.

53. Anlage nach einem oder mehreren der Ansprüche 35, 46 und 52, **dadurch gekennzeichnet, dass** sie einen Reiniger (16) umfasst, dem das entleerte Wasser zugeführt wird und der mit dem besagten Vergaser (56) verbunden ist.

54. Anlage nach Anspruch 53, **dadurch gekennzeichnet, dass** der besagte Reiniger (16) einen Verdampfer mit einem Dampfausgang und einem anderen Ausgang für gebildetes schadstoffhaltiges Wasser umfasst, das den besagten Vergaser (56) versorgt.

55. Anlage nach Anspruch 53, **dadurch gekennzeichnet, dass** sie einen Wärmetauscher umfasst, von dem der Kühlkreislauf mit CO₂ versorgt wird, welches von dem besagten Vergaser (56) stammt, und der mit dem besagten Schneeerzeuger (20) verbunden ist, wobei dem Kühlkreislauf Dampf zugeführt wird, der von der besagten Reinigungsanlage (16) stammt und mit dem besagten Wascher (2) verbunden ist.

56. Anlage nach Anspruch 32, **dadurch gekennzeichnet, dass** sie ein Brennstoffzellensystem (62) umfasst, dem Wasserstoff von dem besagten Vergaser (56) zugeführt wird, und das den besagten Schneeerzeuger (20) mit schadstofffreiem Wasser versorgt.

57. Anlage nach Anspruch 45, **dadurch gekennzeichnet, dass** der Vergaser (56) mit einem Trockner (44) verbunden ist, um die notwendige Wärme zum Betrieb des Letzteren zu liefern.

## Revendications

1. Procédé d'ultrapurification de fumées ou de gaz avec récupération totale des polluants résultants, **caractérisé par** :
- une soumission d'un flux de fumées ou de gaz contenant des polluants à un lavage par aspersion avec de l'eau non polluée à l'intérieur d'une unité de production de neige (20) et une soumission de l'eau, au moment de son passage, à un refroidissement rapide à une température suffisante pour la transformer en flocons de neige, qui, le long de leur trajet, collectent les polluants présents dans le flux de fumée ou de gaz,
- une décharge depuis ladite unité de production de neige (20) desdits flocons de neige qui ont atteint la base de celui-ci, et
- une alimentation d'un gazéifieur (56) avec l'eau polluée résultante provenant desdits flocons de neige.

2. Procédé selon la revendication 1, **caractérisé par** une alimentation d'un flux ascendant de fumées ou de gaz dans ladite unité de production de neige (20).

3. Procédé selon la revendication 1, **caractérisé par** une soumission du flux de gaz ou de fumées à l'action des flocons de neige à l'intérieur de l'unité de production de neige (20) le long d'au moins une partie de leur trajet à co-courant et le long d'au moins une partie de leur trajet à contre-courant.

4. Procédé selon la revendication 1, **caractérisé par** une utilisation, pour le lavage, d'eau non polluée fournie par des piles à combustible (62) alimentées par l'hydrogène produit par ledit gazéifieur (56).

5. Procédé selon la revendication 1, **caractérisé par** un refroidissement de l'eau de lavage à une température non supérieure à 0°C.

6. Procédé selon la revendication 1, **caractérisé par** un refroidissement rapide de l'eau de lavage en refroidissant l'unité de production de neige (20).

7. Procédé selon la revendication 6, **caractérisé par** un refroidissement de ladite unité de production de neige (20) avec un flux de fluide froid circulant à l'extérieur le long des parois de l'unité de production de neige.

8. Procédé selon la revendication 1, **caractérisé par** un refroidissement rapide de ladite eau non polluée avec un flux de gaz froid injecté dans ladite unité de production de neige (20).

9. Procédé selon les revendications 4 et 7, **caractérisé par** un refroidissement de ladite unité de production de neige (20) avec l'oxygène utilisé comme aide à la combustion dans le gazéifieur (56).

10. Procédé selon les revendications 7 et/ou 8, **caractérisé par** un refroidissement rapide de l'eau de lavage avec un flux de dioxyde de carbone.

11. Procédé selon les revendications 7 et/ou 8, **caractérisé par** un refroidissement rapide de l'eau de lavage avec un flux d'azote.

12. Procédé selon la revendication 1, **caractérisé par** un passage du flux de fumées ou de gaz, déjà soumis à l'action des flocons de neige, au travers de charbon actif sec.

13. Procédé selon la revendication 12, **caractérisé par** un séchage du charbon actif avec la chaleur obtenue à partir d'une installation de destruction thermique (56).

14. Procédé selon la revendication 12, **caractérisé par** un séchage du charbon actif avec la chaleur générée par l'unité qui produit le flux de fumées et de gaz à purifier.

15. Procédé selon les revendications 13 et/ou 14, **caractérisé par** une alimentation d'un gazéifieur (56) avec l'eau polluée résultante obtenue par le séchage du charbon actif.

16. Procédé selon la revendication 12, **caractérisé par** une alimentation d'une installation de destruction thermique (56) avec le charbon actif usagé.

17. Procédé selon la revendication 1, **caractérisé en ce que** le flux de gaz ou de fumées est lavé, avant d'être soumis à l'action des flocons de neige, après quoi l'eau polluée résultante est introduite dans le gazéifieur (56).

18. Procédé selon la revendication 17, **caractérisé par** un lavage du flux de fumées ou de gaz en frappant ledit flux par un jet d'eau à grande vitesse.

19. Procédé selon la revendication 18, **caractérisé par** un lavage du flux de fumées ou de gaz avec un jet d'eau formant avec la direction dudit flux de fumées ou de gaz un angle inférieur à 90°.

20. Procédé selon la revendication 18, **caractérisé par** une impression à l'eau d'une vitesse élevée en la faisant tomber d'en haut sur une plaque (4) tournant autour d'un axe vertical.

21. Procédé selon la revendication 17, **caractérisé par** un lavage du flux de fumées ou de gaz avec de l'eau à une température d'environ 4°C.

22. Procédé selon la revendication 21, **caractérisé par** une obtention de l'eau de lavage à une température d'environ 4°C en refroidissant avec un gaz froid.

23. Procédé selon la revendication 21, **caractérisé par** une obtention de l'eau de lavage à une température d'environ 4°C en refroidissant avec un gaz provenant du gazéifieur (56).

24. Procédé selon la revendication 22, **caractérisé par** un refroidissement de l'eau de lavage avec du dioxyde de carbone.

25. Procédé selon la revendication 22, **caractérisé par** un refroidissement de l'eau de lavage avec de l'azote.

26. Procédé selon la revendication 22, **caractérisé par** un refroidissement de l'eau de lavage avec de l'oxygène.

27. Procédé selon la revendication 17, **caractérisé par** un lavage du flux de fumées ou de gaz dans une unité de lavage (2) possédant au moins une paroi effleurée par ledit flux.

28. Procédé selon une ou plusieurs des revendications 1 15 et 17, **caractérisé par** une alimentation des eaux de vidange polluées dans un purificateur (16) avant de les alimenter dans le gazéifieur (56).

29. Procédé selon la revendication 1, **caractérisé par** une utilisation d'un gazéifieur (56) comprenant :
- un désagrégateur à lance thermique réalisant en absence d'air et à une température supérieure à 1600 °C la décomposition totale du matériau à traiter en gaz combustibles à base de H₂ et de CO, de gaz et de matières inertes non combustibles,
- un séparateur à eau pour refroidir brusquement, ensemble, tous les produits ainsi décomposés et pour séparer les produits inertes avec l'eau, générant ainsi de la vapeur d'eau et réduisant la température des gaz à une valeur non inférieure à 1200°C,
- un thermoréacteur-filtre contenant une masse carbonée dépurative chauffée à une température supérieure à 1200°C, ledit thermoréacteur-filtre étant relié audit désagrégateur et audit séparateur pour éliminer les polluants résiduels des gaz et pour les transformer, au moins en partie, en hydrogène, en monoxyde de carbone, en acide et en d'autres produits gazeux complètement utilisables, et
- un système réfrigérant pour lesdits produits gazeux sortant dudit thermoréacteur-filtre.

30. Procédé selon les revendications 28 et 29, **caractérisé par** une condensation de la vapeur générée par le purificateur (16) au moyen du CO₂ liquide produit par le gazéifieur (56) pour obtenir de cette manière de l'eau avec laquelle l'unité de lavage (2) est alimentée.

31. Procédé selon la revendication 29, **caractérisé par** une utilisation de l'hydrogène produit par le gazéifieur (56) pour alimenter des piles à combustible (61), desquelles de l'eau non polluée est obtenue pour alimenter l'unité de production de neige (20).

32. Installation pour la mise en application du procédé selon une ou plusieurs des revendications 1 à 31, **caractérisé en ce qu'**elle comprend :
- une unité de production de neige (20) alimentée avec le flux de fumées ou de gaz à purifier et aussi alimentée avec de l'eau non polluée,
- un moyen de refroidissement (34) associé avec ladite unité de production de neige (20), pour transformer ladite eau en flocons de neige,
- au moins un conduit de sortie (36) provenant de ladite unité de production de neige (20) pour le flux de fumées et de gaz purifiés, et
- un moyen (28) pour relier la base (26) de ladite unité de production de neige (20) à un gazéifieur (56) pour l'eau polluée provenant desdits flocons de neige.

33. Installation selon la revendication 32, **caractérisée en ce que** le flux de fumées ou de gaz dans ladite unité de production de neige (20) est ascendant.

34. Installation selon la revendication 32, **caractérisée en ce que** l'unité de production de neige (20) est profilée de manière à offrir au moins une partie au travers de laquelle le flux de fumées ou de gaz prend un trajet descendant et au moins une partie dans laquelle il est ascendant.

35. Installation selon la revendication 32, **caractérisée en ce que** la base de ladite unité de production de neige (20) est de forme conique.

36. Installation selon la revendication 34, **caractérisée en ce que** l'unité de production de neige (20) comprend au moins deux récipients (22) d'extension sensiblement verticale, reliés ensemble pour définir un trajet en labyrinthe pour le flux de fumées ou de gaz.

37. Installation selon la revendication 32, **caractérisée en ce que** les parois de l'unité de production de neige (20) sont isolées de la chaleur.

38. Installation selon la revendication 32, **caractérisée en ce que** l'unité de production de neige (20) est pourvue dans la partie supérieure d'un moyen (32) pour délivrer ladite eau non polluée par aspersion.

39. Installation selon la revendication 32, **caractérisée en ce que** l'unité de production de neige (20) est pourvue dans la partie supérieure d'une pluralité de buses (34) pour délivrer un flux de gaz froid.

40. Installation selon la revendication 32, **caractérisée en ce que** l'unité de production de neige (20) est pourvue dans la partie supérieure d'au moins un anneau perforé (34) rempli de gaz froid.

41. Installation selon la revendication 32, **caractérisée en ce que** les parois de l'unité de production de neige (20) présentent au moins un interstice pour faire circuler un flux de gaz froid.

42. Installation selon la revendication 32, **caractérisée en ce que** l'orifice de sortie pour le flux de fumées ou de gaz de l'unité de production de neige (20) est relié via un conduit (36) à un filtre au charbon actif (38).

43. Installation selon la revendication 42, **caractérisée en ce que** les caractéristiques dudit conduit (36) sont choisies afin de permettre le chauffage du flux de fumées ou de gaz au moment où celui-ci y circule.

44. Installation selon la revendication 42, **caractérisée en ce que** ledit conduit (36) est pourvu d'un moyen de chauffage.

45. Installation selon la revendication 42, **caractérisée en ce qu'**un sécheur (44) pour régénérer ledit charbon actif est associé avec le filtre à charbon actif (38), conjointement avec une ligne de convoyage (50) dudit charbon régénéré à l'intérieur dudit filtre (38).

46. Installation selon la revendication 45, **caractérisée en ce que** ledit sécheur (44) est pourvu d'un moyen (48) pour être relié audit gazéifieur (56).

47. Installation selon la revendication 45, **caractérisée en ce que** ledit sécheur (44) est relié à une installation de destruction thermique (56) pour fournir la chaleur nécessaire pour le fonctionnement du sécheur.

48. Installation selon la revendication 32, **caractérisée en ce qu'**elle comprend une unité de lavage (2) fournie en amont de ladite unité de production de neige (20) pour un traitement préliminaire du flux de fumées ou de gaz à purifier.

49. Installation selon la revendication 48, **caractérisée en ce que** ladite unité de lavage (2) consiste en un récipient de forme circulaire équipé à l'intérieur d'une plaque rotative (4), dont le bord définit avec la paroi dudit récipient un passage de forme annulaire pour le mélange desdites fumées ou desdits gaz alimenté dans ledit récipient, avec l'eau de lavage qui est faite pour tomber de la partie supérieure dudit récipient sur ladite plaque rotative (4).

50. Installation selon la revendication 49, **caractérisée en ce que** la plaque rotative (4) présente une concavité légèrement tournée vers le haut.

51. Installation selon la revendication 49, **caractérisée en ce que** ledit récipient est de forme biconique, avec la partie centrale de plus grand diamètre positionnée à la hauteur de ladite plaque rotative (4).

52. Installation selon la revendication 32, **caractérisée en ce que** ladite unité de lavage (2) est reliée audit gazéifieur (56) par un conduit (14).

53. Installation selon une ou plusieurs des revendications 35,46 et 52, **caractérisée en ce qu'**elle comprend un purificateur (16) alimenté avec les eaux de vidange et relié audit gazéifieur (56).

54. Installation selon la revendication 53, **caractérisée en ce que** ledit purificateur (16) comprend un évaporateur avec une sortie pour la vapeur et une autre sortie pour l'eau polluée résultante, laquelle alimente ledit gazéifieur (56).

55. Installation selon la revendication 53, **caractérisée en ce qu'**elle comprend un échangeur de chaleur (58), dont le circuit de refroidissement est alimenté par du CO₂ provenant dudit gazéifieur (56) et qui est relié à ladite unité de production de neige (20), sachant que le circuit refroidi est alimenté avec de la vapeur provenant dudit purificateur (16) et étant relié à ladite unité de lavage (2).

56. Installation selon la revendication 32, **caractérisée en ce qu'**elle comprend un système de pile à combustible (62) qui est alimenté avec de l'hydrogène provenant dudit gazéifieur (56) et qui alimente ladite unité de production de neige (20) avec de l'eau non polluée.

57. Installation selon la revendication 45, **caractérisée en ce que** le gazéifieur (56) est relié au sécheur (44) pour fournir la chaleur nécessaire au fonctionnement de ce dernier.
